# EUROPEAN PATENT APPLICATION

(11) **EP 3 376 357 A1**
(43) Date of publication of application: **19.09.2018**
(21) Application number: 18150950.6
(22) Date of filing: 10.01.2018
(51) Int. Cl.: G06F 3/0488

(54) **CHARACTER INPUT DEVICE, CHARACTER INPUT METHOD, AND CHARACTER INPUT PROGRAM**

(30) Priority: 14.03.2017 JP 2017048597
(71) Applicant: OMRON CORPORATION, Kyoto-shi, Kyoto 600-8530 (JP)
(72) Inventor: UEBUCHI, Takao, Kyoto-shi, Kyoto 604-8152 (JP); NAKAYAMA, Takuya, Kyoto-shi, Kyoto 604-8152 (JP)
(74) Representative: Horn Kleimann Waitzhofer Patentanwälte PartG mbB

(57) **Abstract**

Cursor movement at the time of character input is performed reliably and easily. A character input device 10 is provided with an operation content determination unit 30 and a display control unit 40. The operation content determination unit 30 determines the content of an operation on a display surface. The display control unit 40 selects one of a keyboard screen 211 for character input and a cursor operation screen 212 for character editing, and displays the selected screen on the display surface. The operation content determination unit 30 instructs the display control unit 40 to switch from the keyboard screen 211 to the cursor operation screen 212, if the operation content is a multi-touch.

## Description

### CROSS-REFERENCES TO RELATED APPLICATIONS

This application claims priority to Japanese Patent Application No. 2017-048597 filed March 14, 2017, the entire contents of which are incorporated herein by reference.

### FIELD

The present invention relates to a character input technology for utilizing operation input performed with a touch panel.

### BACKGROUND

Heretofore, devices for performing character input using a touch panel have been variously devised. For example, a character processing device recited in JP 2015-36881A displays a software keyboard and a character editing screen of an application on a touch panel, and performs character editing on the character editing screen of the application, according to the content of operations on the software keyboard.

With such a device, a user touches the character editing screen of the application, in the case of moving the position of a cursor in an editing character string. More specifically, the user touches the position to which it is desired to move the cursor on the character editing screen of the application.

JP 2015-36881A is an example of background art.

However, with the above conventional configuration, in order to move the position of the cursor, the user has to move the cursor from a display screen of the software keyboard to the character editing screen of the application. Accordingly, the user has to perform a complex operation involving a large movement with his or her finger in order to move the cursor.

Also, when the display screen is small and the characters of the application are small, moving the cursor to a desired position is not easy, due to not being able to touch the desired position.

Accordingly, an object of the present invention is to provide a character input technology that allows cursor movement at the time of character input to be performed reliably and easily.

### SUMMARY

A character input device of this invention is provided with an operation content determination unit and a display control unit. The operation content determination unit is configured to determine a content of an operation on a display surface. The display control unit is configured to select one of a keyboard screen for character input and a cursor operation screen for character editing, and display the selected screen on the display surface. The operation content determination unit instructs the display control unit to switch from the keyboard screen to the cursor operation screen, if the operation content is a multi-touch.

With this configuration, display is switched from the keyboard screen to the cursor operation screen, by an operation called a multi-touch on the keyboard screen that is simple and involves almost no movement of the operation position.

Also, with the character input device of this invention, the operation content determination unit instructs the display control unit to switch from the cursor operation screen to the keyboard screen, if the operation content matches an end operation of a cursor operation.

With this configuration, the screen is switched (returned) from the cursor operation screen to the keyboard screen, by a simple operation on the cursor operation screen.

Also, with the character input device of this invention, the operation content determination unit, upon detecting movement of a touch detection position in a state of the multi-touch, instructs a movement locus of the movement to the display control unit. The display control unit performs, on the cursor operation screen, display of movement of a cursor that depends on the movement locus.

With this configuration, a cursor movement operation is accepted, by the cursor operation screen which is displayed in the same display area as the keyboard screen.

Also, with the character input device of this invention, the operation content determination unit, upon detecting movement of a one-point touch detection position after the multi-touch, instructs a movement locus of the movement to the display control unit. The display control unit performs, on the cursor operation screen, display of a range selection that depends on the movement locus.

With this configuration, a range selection operation is accepted, by the cursor operation screen which is displayed in the same display area as the keyboard screen.

Cursor movement at the time of character input can be performed reliably and easily.

### BRIEF DESCRIPTION OF THE DRAWINGS

Fig. 1 is a functional block diagram of a character input device according to an embodiment of the present invention.
Fig.2 is a screen diagram of a touch panel in a state where a keyboard screen is displayed.
Fig.3 is a screen diagram of the touch panel in a state where a cursor operation screen is displayed.
Fig.4 is a flowchart of a character input method according to the embodiment of the present invention.
Fig.5 is a screen diagram of the touch panel at the time of first range selection processing.
Fig.6 is a screen diagram of the touch panel at the time of second range selection processing.

### DETAILED DESCRIPTION

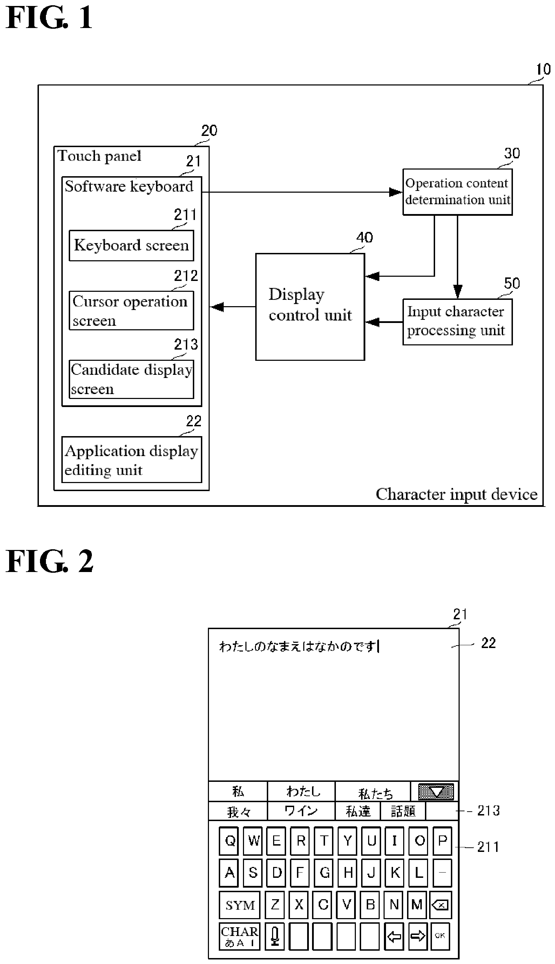

A character input technology according to an embodiment of the present invention will be described, with reference to the drawings. Fig. 1 is a functional block diagram of a character input device according to the embodiment of the present invention. Fig. 2 is a flowchart of a character input method according to the embodiment of the present invention.

As shown in Fig. 1, a character input device 10 is provided with a touch panel 20, an operation content determination unit 30, a display control unit 40, and an input character processing unit 50. The operation content determination unit 30, the display control unit 40 and the input character processing unit 50 may be realized by ICs that individually execute the respective functions, or by realizing and storing these functions in the form of programs, and executing these programs with a computational processing element.

The touch panel 20 is provided with a software keyboard 21 and an application display editing unit 22. The software keyboard 21 has a keyboard screen 211, a cursor operation screen 212, and a candidate display screen 213.

Fig. 2 is a screen diagram of a touch panel in a state where the keyboard screen is displayed. As shown in Fig. 2, in a state where the keyboard screen 211 is selected, the keyboard screen 211, the candidate display screen 213, and the application display editing unit 22 are displayed on the touch panel 20.

Images of various types of keys are disposed on the keyboard screen 211. That is, the keyboard screen 211 is a screen that mainly accepts operations for character input.

Characters input via the keyboard screen 211 are displayed on the application display editing unit 22. These characters include both characters before candidate conversion and characters after candidate conversion. Note that characters before candidate conversion and characters after candidate conversion are identifiably displayed, and, for example, characters before candidate conversion may be display with an underscore. Also, a cursor bar representing an editing point or an input point is displayed on the application display editing unit 22. Characters serving as candidates such as prediction candidates or the like for characters before candidate conversion are displayed on the candidate display screen 213.

The application display editing unit 22 is disposed on the upper side of the display screen of the touch panel 20. The keyboard screen 211 is arranged on the lower side of the display screen. The candidate display screen 213 is disposed between the keyboard screen 211 and the application display editing unit 22.

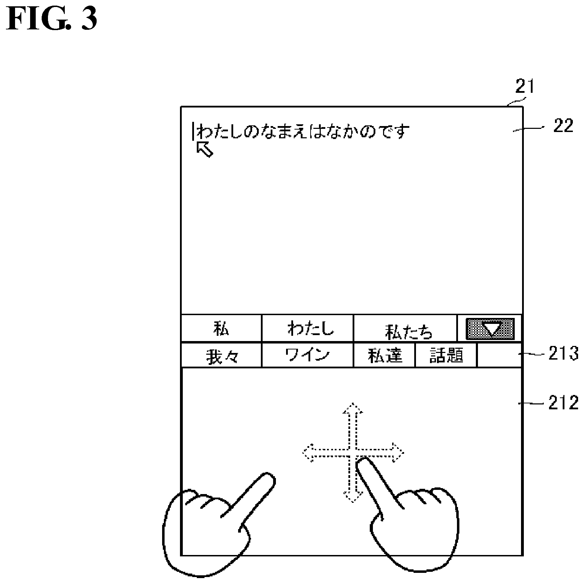

Fig. 3 is a screen diagram of the touch panel in a state where the cursor operation screen is displayed. As shown in Fig. 3, in a state where the cursor operation screen 212 is selected, the cursor operation screen 212, the candidate display screen 213 and the application display editing unit 22 are displayed on the touch panel 20.

The touchpad that is represented by a monochrome rectangle, for example, is displayed on the cursor operation screen 212. A pointer that instructs the position of the cursor as well as the character to be edited is displayed on the application display editing unit 22. That is, the cursor operation screen 212 is a screen that accepts operations for character editing.

The cursor operation screen 212 is disposed in the same location as the keyboard screen 211. That is, the display screen of the touch panel 20 switches between display of the cursor operation screen 212 and the keyboard screen 211.

The operation content determination unit 30 determines the operation position on the touch panel 20, the number of operation points, and the operation movement. Here, operation movements include, for example, a touch which is contact on the display screen, a swipe which involves moving the touch position while contacting (touching) the display surface, and a touch-up which is the end of contact with the operation screen. The operation content determination unit 30 gives display instructions such as cursor movement instructions and detects input keys, using the content of operations on the display surface that is constituted by these items.

The operation content determination unit 30 outputs display instructions to the display control unit 40. The operation content determination unit 30 outputs detected input keys to the input character processing unit 50.

The input character processing unit 50 extracts characters that depend on the input keys and conversion candidates such as prediction candidates or the like for the characters, and outputs the extracted characters and conversion candidates to the display control unit 40.

The display control unit 40 performs display control, using the display instructions from the operation content determination unit 30, the characters and conversion candidates from the input character processing unit 50, and the like. Specifically, the display control unit 40 reflects the movement of the cursor bar and the pointer, which will be discussed later, on the application display editing unit 22 according to the display instructions from the operation content determination unit 30. The display control unit 40 displays input characters on the application display editing unit 22 and displays conversion candidates on the candidate display screen 213.

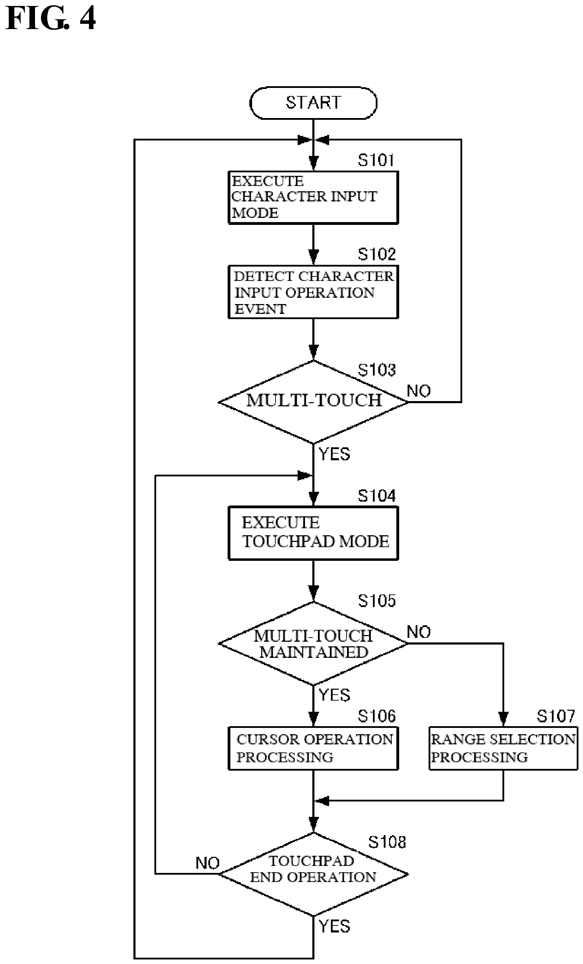

Next, the methods of character input and character editing that use the specific keyboard screen 211 and the cursor operation screen 212 will be described. Fig. 4 is a flowchart of the character input method according to the embodiment of the present invention.

First, the character input device 10 executes a character input mode upon accepting an operation of an application following character input (S101). In the character input mode, the character input device 10 performs display including the keyboard screen 211, as shown in Fig. 2. The character input device 10 then enters a character input event standby state.

Next, when an operation on the display surface by a user occurs, the character input device 10 detects a character input operation event that depends on the content of the operation (S102).

The character input device 10 detects whether the event is a multi-touch on the keyboard screen 211. A multi-touch is, as shown in Fig. 3, a movement involving the user contacting a plurality of locations on the display screen simultaneously with his or her fingers or the like.

The character input device 10, if the event is not a multi-touch (S103: NO), perform extraction of a character through detection of the key input position, extraction of a prediction candidate or the like, and returns to a character input event standby state.

The character input device 10, if the event is a multi-touch (S103: YES), ends the character input mode and executes a touchpad mode (S104). In the touchpad mode, the character input device 10 performs display including the cursor operation screen 212, as shown in Fig. 3. That is, the character input device 10 switches the keyboard screen 211 to the cursor operation screen 212, in response to the switch from the character input mode to the touchpad mode.

At this time, as mentioned above, the cursor operation screen 212 is disposed in place of the keyboard screen 211 in the same display position on the display screen. Also, at this time, the pointer for moving the cursor is displayed on the application display editing unit 22.

After transitioning to the touchpad mode, the character input device 10, if it is detected that the multi-touch is being maintained (S105: YES), executes cursor operation processing (S106).

Specifically, when the user performs an operation moving the touch position on the display surface while maintaining the multi-touch, the operation content determination unit 30 of the character input device 10 determines this operation and sets a movement locus, as shown with dotted line arrows in Fig. 3. The operation content determination unit 30 instructs the display control unit 40 to perform movement of the display position of the pointer that depends on this movement locus. The display control unit 40 performs display that moves the pointer in accordance with this instruction. Note that, together with this movement of the pointer, the display control unit 40 also moves the position of the cursor bar. At this time, as long as the multi-touch is maintained, one or a plurality of moving touch detection points may be detected.

On the other hand, the character input device 10, if the multi-touch state is released and one touch detection position (single touch) is detected (S105: NO), executes range selection processing (S107).

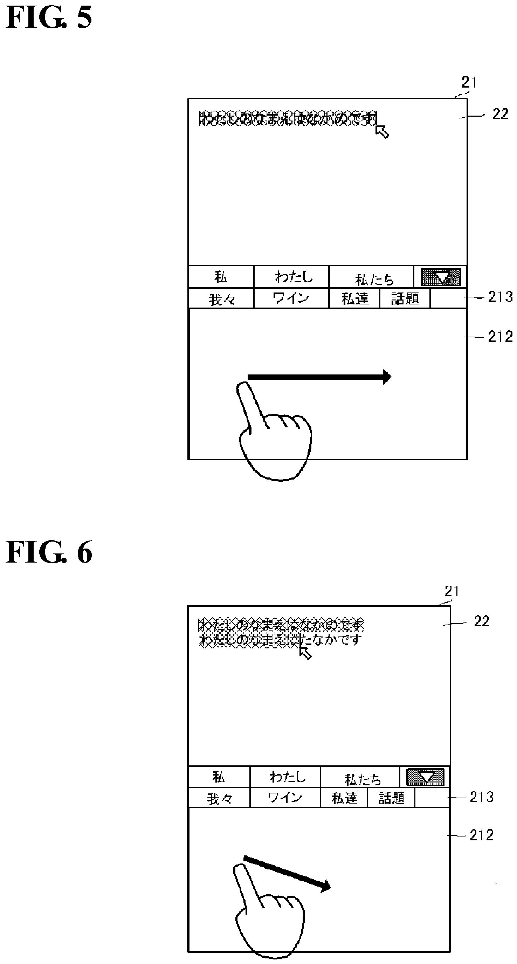

Specifically, in this case, the character input device 10 executes display control such as shown in Figs. 5 and 6. Fig. 5 is a screen diagram of the touch panel at the time of first range selection processing. Fig. 6 is a screen diagram of the touch panel at the time of second range selection processing.

When the user releases the multi-touch, and moves his or her finger while maintaining contact at one point, as shown in Figs. 5 and 6, the operation content determination unit 30 determines this operation and sets a movement locus. The operation content determination unit 30 designates a character selection range, according to this movement locus. The display control unit 40 performs shading display control on the characters displayed on the application display editing unit 22, in accordance with this instruction.

For example, in the case of Fig. 5, when the user swipes his or her finger from left to right, the touch position on the display surface moves in a sideways direction from left to right. In this case, the operation content determination unit 30 determines the touch position and the amount of movement of the touch position in the sideways direction. The operation content determination unit 30 instructs this movement amount to the display control unit 40. The display control unit 40 determines the selection range of the character string that is determined by the position of the cursor bar and this movement amount, and performs shading display control on this character string.

Also, in the case of Fig. 6, when the user swipes his or her finger from the upper left to the lower right, the touch position on the display surface moves in a diagonal direction from the upper left to the lower right. In this case, the operation content determination unit 30 determines the touch position and the amount of movement of the touch position in the diagonal direction. The operation content determination unit 30 instructs this movement amount to the display control unit 40. The display control unit 40 determines the selection range (two lines in this case) of the character string that is determined by the position of the cursor bar and this movement amount, and performs shading display control on the character string.

In this way, by using the configuration and processing of the present embodiment, a cursor operation can be accepted in the same area of the touch panel 20 as the keyboard screen 211, and cursor movement at the time of character input can be performed reliably and easily.

Note that the selection range of these character strings is also given to the input character processing unit 50, and the input character processing unit 50 extracts conversion candidates that depend on the character string of the selection range, and outputs the extracted conversion candidates to the display control unit 40. The display control unit 40 updates display of the candidate display screen 213, according to these new conversion candidates.

Returning to Fig. 4, the character input device 10, if the operation content matches the end operation of the touchpad mode (S108: YES), the touchpad mode is ended and the character input mode is executed (S101). Following this, the character input device 10 switches display from the cursor operation screen 212 to the keyboard screen 211.

On the other hand, the character input device 10, if the operation content does not match the end operation of the touchpad mode (S108: NO), continues to execute the touchpad mode (S104).

The end operation of the touchpad mode involves, for example, a touch-up, that is, the user removing his or her finger from the display surface. Note that the end operation of the touchpad mode is not restricted thereto, and may be allocated to an operation that is different from the abovementioned transition operation to the touchpad mode, cursor operation and range selection operation.

Transitioning to the character input mode can, however, be realized with an easy operation, by allocating a touch-up to the end operation of the touchpad mode. That is, after changing the character input position or changing the range selection though a cursor operation during character input, characters are generally re-input. Simply by the user removing his or her finger from the display surface after ending the cursor operation, character input using keys can thus be resumed, without the user performing a large movement of his or her finger horizontally, by returning to the character input mode.

Note that a ratio of a movement amount La of the touch detection position on the cursor operation screen 212 mentioned above and a movement amount Lp of the pointer of the application display editing unit 22 may be 1:1, or may be other ratios. For example, if La:Lp = 1:1, the movement amount of the pointer (cursor) is easily comprehended intuitively. Also, if La:Lp = 1:n (where n is a real number larger than 1), the movement amount of the pointer (cursor) can be configured to be greater than the movement amount of the user's finger. The pointer (cursor) can thereby be moved a large amount with a small movement of the user's finger. Also, if La:Lp = n:1 (where n is a real number larger than 1), the movement amount of the pointer can be made smaller than the movement amount of the user's fingers. The movement position of the pointer (cursor) can thereby be accurately set.

## Claims

1. A character input device, comprising:
an operation content determination unit configured to determine a content of an operation on a display surface; and
a display control unit configured to select one of a keyboard screen for character input and a cursor operation screen for character editing, and display the selected screen on the display surface,
wherein the operation content determination unit instructs the display control unit to switch from the keyboard screen to the cursor operation screen, if the operation content is a multi-touch involving simultaneous operations on a plurality of positions.

2. The character input device according to claim 1,
wherein the operation content determination unit instructs the display control unit to switch from the cursor operation screen to the keyboard screen, if the operation content matches an end operation of a cursor operation.

3. The character input device according to claim 1 or 2,
wherein the operation content determination unit, upon detecting movement of a touch detection position in a state of the multi-touch, instructs a movement locus of the movement to the display control unit, and
the display control unit performs, on the cursor operation screen, display of movement of a cursor that depends on the movement locus.

4. The character input device according to any of claims 1 to 3,
wherein the operation content determination unit, upon detecting movement of a one-point touch detection position after the multi-touch, instructs a movement locus of the movement to the display control unit, and
the display control unit performs, on the cursor operation screen, display of a range selection that depends on the movement locus.

5. A character input method according to which a computational processing device executes:
an operation content determination step of determining a content of an operation on a display surface; and
a display control step of selecting one of a keyboard screen for character input and a cursor operation screen for character editing, and displaying the selected screen on the display surface,
wherein, in the operation content determination step, switching from the keyboard screen to the cursor operation screen is instructed, if the operation content is a multi-touch involving simultaneous operations on a plurality of positions.

6. A character input program for causing a computational processing device to execute:
operation content determination processing for determining a content of an operation on a display surface; and
display control processing for selecting one of a keyboard screen for character input and a cursor operation screen for character editing, and displaying the selected screen on the display surface,
wherein, in the operation content determination processing, switching from the keyboard screen to the cursor operation screen is instructed, if the operation content is a multi-touch involving simultaneous operations on a plurality of positions.
